# EUROPEAN PATENT SPECIFICATION

(11) **EP 2 776 214 B1**
(45) Date of publication and mention of the grant of the patent: **06.04.2016**
(21) Application number: 12768829.9
(22) Date of filing: 04.10.2012
(51) Int. Cl.: B25F 5/02

(54) **PNEUMATIC POWER TOOL**
PNEUMATISCHES WERKZEUG
OUTIL PNEUMATIQUE

(30) Priority: 07.10.2011 SE 1150928
(43) Date of publication of application: 17.09.2014
(73) Proprietor: Atlas Copco Industrial Technique AB, 105 23 Stockholm (SE)
(72) Inventor: RADIF, Nabil Khalil, S-131 40 Nacka (SE)
(86) International application number: PCT/EP2012/069639
(87) International publication number: WO 2013/050484

(56) References cited:
- EP-A1- 0 696 496
- EP-A1- 1 308 247
- WO-A1-01/94080
- DE-A1- 4 210 201
- TW-U- M 263 198
- US-A- 6 155 354

## Description

The invention relates to a pneumatic power tool. In particular, the invention is related to a pneumatic power tool with an improved exhaust system.

A conventional pneumatic power tool is known from the Japanese patent specification JP 3910163.

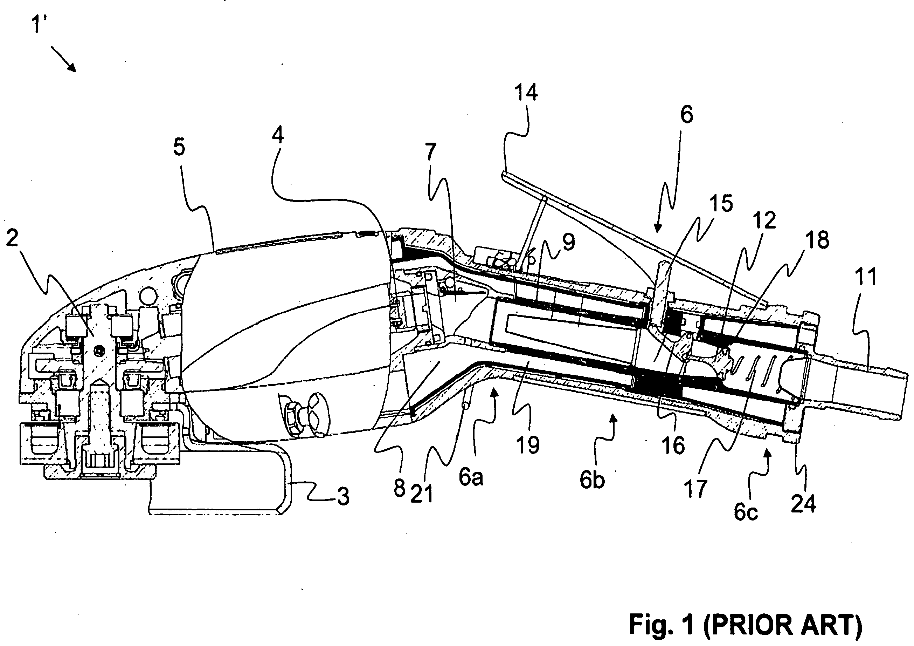

A similar type of power tool in the form of a grinder is shown in figure 1. This conventional grinder 1' includes a pneumatically driven turbine motor 4, which is housed inside a main housing 5, and which is arranged to drive a rotating grinder disc. The grinder further includes a handle 6 on which an actuator 14 and a locking lever 21 are arranged. Further, the handle 6 includes both a supply line 9 for the provision of compressed air and an outlet line 19 to rearward exhaust the expanded air.

A problem inherent in the above described and previously known grinder 1' is that the handle 6 becomes very cold due to the low temperature of the exhausted air. Typically, the temperature of the exhausted air is 60°C lower than that of the provided compressed air, and normally the compressed air that is used in the grinder arrives at room temperature, i.e. around 25°C. Hence the outlet temperature may be as low as below -35°C. The temperature change is a direct consequence of the reduction in pressure necessary to drive the turbine motor 4 of the grinder. Normally the compressed air has pressure of about 6.3 bar, whereas the pressure of the exhausted air has a pressure of just above atmospheric pressure, i.e. about 1.3 bar. Other examples are known from EP 13082247 A1 and WO 01/94080 A1.

Hence, an effective insulation is needed in order to avoid that the handle becomes too cold for the operator to hold. Also, from an ergonomic point of view, it is vital that the handle has a limited diameter, such that it may be comfortably handled by an operator regardless of his or hers hand size. For a handle that involves the necessary heat insulation the diameter of the handle may easily be too great to grasp comfortably for an operator with a small or medium sized hand.

Hence, there is a need for a power tool with an ergonomic handle, which still allows the cold exhaust air to be released backwards.

### Summary of the invention

An object of the invention is to provide a power tool with a more ergonomic functional design than conventional power tools.

A further object of the invention is to provide a power tool that allows the exhaust flow to be released backwards without disturbing or obstructing the operator in any way.

Yet a further object of the invention is to provide a more secure power tool, such that the risk for accidents for the operator or persons in the vicinity of the operator is reduced compared to the case of conventional power tools.

The invention relates to a pneumatic power tool comprising a pneumatic motor for driving an output shaft upon which a tool part is to be arranged; a housing, which covers said motor and which has a front end and an opposed rear end, wherein said output shaft is arranged to extend from the housing near the front end of the housing, and wherein an air inlet is arranged in the vicinity of the rear end of the housing; a handle arranged at the rear end of said housing; and a supply line for the supply of pressure air to the pneumatic motor via the inlet. An exhaust line is arranged to exhaust expanded air that is produced by the pneumatic motor under operation, which exhaust line is arranged rearwards from the housing such that it extends outside and at a distance from the handle and substantially parallel to said handle.

With the power tool according to the invention a more ergonomic pneumatic power tool may be provided, by means of a handle that may be comfortably gripped, both in terms of its diameter and its temperature.

Further, the exhaust flow is allowed to be released backwards without disturbing or obstructing the operator in any way, by means of the inventive exhaust line. Further, in a specific embodiment of the invention, the location of the exhaust line with respect to the handle is such that the exhaust line forms a protective loop around at least a portion of the operator's hand, such that a higher degree of safety is provided for the operator.

Further objects and advantages of the invention will appear from the following specification and claims.

Short description of the drawings

In the following detailed description reference is made to the accompanying drawings, of which:
Fig. 1 is a sectional view of a power tool according to the prior art.
Fig. 2 is a sectional view of a pneumatic power tool in accordance with the invention.

### Detailed description of one embodiment of the invention

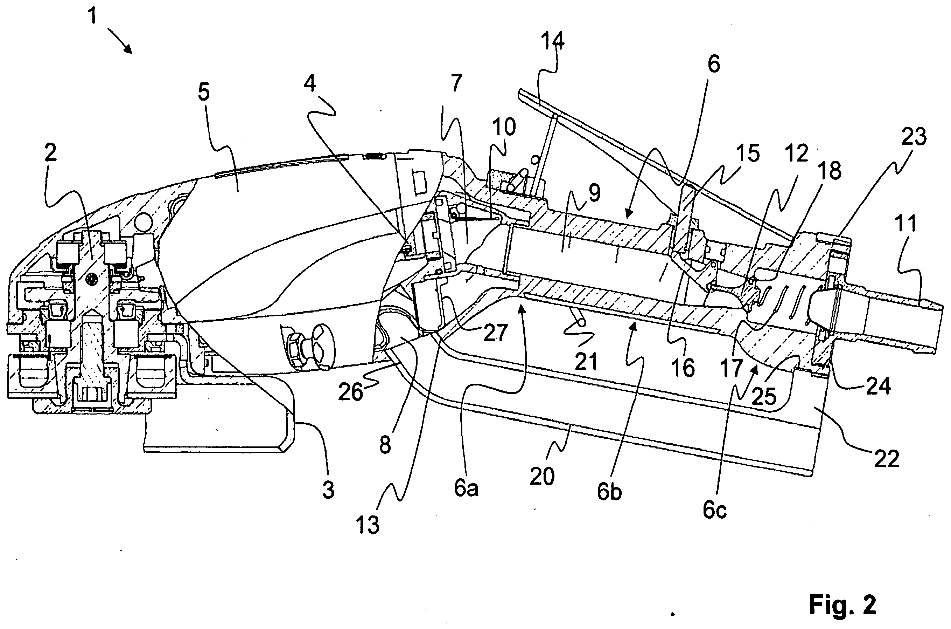

Figure 2 shows a cross sectional view of one possible embodiment of a pneumatic power tool in accordance with the invention. In the following detailed description the power tool is exemplified by an angle grinder. The invention is however not limited to an angle grinder, but covers any type of pneumatic power tool, such as nut runners and other types of grinder. The shown power tool 1 includes an output shaft 2 which is connectable to a tool part, e.g. in the form of a grinder disc (not shown). The grinder disc is partly covered by a protective cover 3. The grinder disc is driven by a pneumatic motor 4, which in the shown embodiment is a turbine motor. The invention does however also cover other pneumatic motor types, such as a vane motor. A housing 5 is arranged around the pneumatic motor 4 and other interior parts. A handle 6 adapted to be held by the main hand of an operator is arranged at a rear end of the power tool, opposed to the grinder disc. A secondary handle (not shown) is arranged at the front end of the cover 3 in a conventional manner. Normally, the secondary handle is arranged on the left part of the housing, such that it may be held by the operator's left hand. This is the normal position that suits a right handed person holding his right hand on the primary handle 6. The secondary handle may however also be arranged on the opposite right side to suit a left handed person.

As is apparent to a skilled person all pneumatic motors are driven by high pressure air, e.g. compressed air of an elevated pressure. Hence, the power tool 1 includes an inlet 7 through which compressed air is provided to the motor 4 and an outlet 8 for exhausting the expanded exhaust air from the motor. The inlet 7 is connected to a pressure air supply line 9, which preferably runs inside the handle 6 of the power tool 1. The rear part 6c of the handle 6 includes an inlet nipple 11, which is connectable to a pressure air hose (not shown) that may be clamped onto the nipple 11.

The pressure air supply line 9 includes a valve 12 for opening and closing the connection from the pressure air supply to the pneumatic motor 4. When the valve 12 is opened, compressed air, typically of a pressure of 6.3 bars, is allowed to enter the housing 5 of the power tool 1 and thereby to affect the turbine of the pneumatic motor 4, which in turn drives the rotation of the output shaft 2 in a conventional manner.

An actuator 14 in the form of a tangent is arranged on the upper side of the handle 6 for controlling the opening of the valve 12. The actuator 14 is arranged such that when it is pressed downwards it affects a pin 15 which is connected via a pivoted valve link 16 to the valve 12. When the actuator 14 is pushed downwards, the valve 12 will be pressed against the action of a spring 17, which is arranged to keep the valve in a closed position inside a valve seat 18. As the valve 12 is pushed to the right it allows the pressure air to flow past it in the ring formed opening that is thus formed between the valve 12 and the seat 18. Further, an over speed shut off valve 10 is located at the inlet 7, in order to block the inlet 7 if the rotational speed of the motor 4 exceeds a predetermined threshold value.

The compressed air drives the rotation of the pneumatic motor 4, e.g. turbine motor, in a conventional manner. The turbine is driven by the pressure difference on the inlet side 7 and outlet side 8 of the turbine. As indicated above, the pressure on the inlet side is about 6 bars, whereas the pressure at the outlet side is close to the atmospheric pressure, e.g. just above 1 bar. This massive and instant pressure reduction results in a volume increase of the air as it passes the turbine. However, it does also result in an important lowering of the temperature of the gas.

The reduction in temperature is troublesome as it implies that the exhaust air will have an uncomfortably low temperature, which may negatively affect the environment for both the operator and others in the immediate vicinity of the power tool.

Often, it is desired to release the expanded exhaust air that is produced by the pneumatic motor under operation backwards. In the power tool according to the prior art shown in figure 1 an exhaust line 19 is arranged inside the handle 6, in a ring formed passage that is arranged coaxially outside the supply line 9. This arrangement involves two inconveniencies for the operator. Firstly, the handle needs to have a relatively large diameter in order to house both the supply line 9 and the exhaust line 19. Typically, the diameter will therefore be too large for a person with a small or medium sized hand to grip comfortably. Secondly, the handle 6 will be considerably cooled down by the cool exhaust air, such that the handle will become uncomfortably cold. Moreover these two problems are incompatible in the way that a solution to one problem will add on to the other problem.

If for example an efficient insulation is added to the handle 6, in order to reduce the cooling effect on the hand of the operator, the diameter of the handle will, as a result of the insulation, be increased. If, on the other hand, the cross sectional area of the exhaust line 19 is reduced, the efficiency of the pneumatic motor may be inhibited due to the pressure drop in the portion of the exhaust line with a limited cross section.

In the solution according to the invention, as illustrated in figure 2, this is solved by a separate exhaust line 20, i.e. an exhaust line that does not run inside the handle 6. In the shown embodiment the exhaust line 20 is arranged to extend rearwards from the housing 5 at a distance from the handle and substantially parallel to said handle 6.

The outlet 8 from the power tool housing to the exhaust line 20 is advantageously arranged via an outlet opening 13 at the lower side of the power tool housing 5, where it constitutes the least obstruction to the operator. For the same reason the exhaust line 20 is located below the handle 6. Further, guide plates 27 are arranged inside the rear part of the housing 5, in order to guide the exhaust air towards the outlet opening 13.

As indicated above, the handle 6 comprises a front part 6a that is connected to the power tool housing 5 and a rear part 6c which comprises an inlet nipple 11 for connection to a pressure air supply hose. Between these end parts 6a and 6c a central handle part 6b, which is arranged to be gripped by the hand of an operator, is provided. Thus, during normal operation, the fingers of the operator will be placed around the central handle part 6b, in the opening formed between said central handle part 6b and the exhaust line 20. Therefore, the exhaust line 20 is preferably arranged at such a distance from the central handle part 6b that the space where the fingers of the operator should be located is optimised. Typically, the space should be large enough to allow a comfort insertion of a glove equipped hand. On the other hand it should not be so large so as to make the power tool bulky and difficult to manoeuvre.

Further, the exhaust line 20 will provide protection for the hand of the operator, and form a loop around a part of the hand. In order to provide a good protection for the hand, the exhaust line 20 should not be separated by too much from the handle 6. Generally, the distance between the exhaust line 20 and the central handle part 6b of the handle 6 should be greater than 2 cm, and preferably greater than 3 cm. Also, the same distance should preferably be smaller than 10 cm, preferably smaller than 8 cm, and more preferably smaller than 6 cm.

Further, a locking lever 21 for locking the actuator in a closed position is arranged on the handle. Conventionally, such a locking lever has been arranged either on the upper side of the power tool or on its lower side. In the inventive power tool it is advantageous to locate the locking lever such that is at least partly covered by the exhaust line 20, i.e. on the lower side of the handle, where it may be manoeuvred by the fingers of the operator.

In a further embodiment of the invention the exhaust line may be arranged on the side of the handle. The handle should however preferably be arranged such that the power tool 1 could be held by either a right hand or a left hand. Therefore, the exhaust line 20 should not be arranged such that it may interfere with the arm of an operator, regardless of which hand he or she uses to hold the power tool 1. Typically this implies that the exhaust line 20 may not be arranged above an imaginary centre line of the handle 6. Also, if the exhaust line is arranged on the side of the handle, the locking lever 21 may advantageously also be located on the same side of the handle as the exhaust line 20, such that is protected from hampering by said exhaust line.

In order to fix the exhaust line 20 with respect to the power tool 1 and the handle, the exhaust line may be connected to the rear part 6c of the handle by means of a connective bridge 22. Preferably, this bridge is produced of a heat insulating material. In one embodiment, the exhaust line is produced in one integral piece including the connective bridge 22 and a fastening ring 23, which is arranged to be engaged around the rear end 6c of the handle. The rear end 6c of the handle may be furnished with a projective ring 24. Correspondingly, a rim 25 may be arranged on the inside of the fastening ring 23 in order to engage said projective ring 24. This arrangement provides for a secure and easily achievable connection between the handle 6 and the exhaust line 20, which is achieved by threading the fastening ring 23 over and around the projective ring 24 of the rear end 6c of the handle, and by inserting the connection end 26 of the exhaust line 20 into the outlet opening 13.

In a further not shown embodiment the handle is not furnished with a projective ring, and consequently the fastening ring 23 does not have to include a rim 25. Instead, the fastening ring may be planar and arranged to fit tightly around the outer edge of the rear end 6c of the handle. The fastening ring 23 may be held in place by a blocking disc arranged around the inlet nipple and extending outwards such that it blocks the fastening ring 23.

In a further, not shown embodiment the connective bridge 22 may be attached to the lower side of the rear end 6c of the handle, e.g. by means of a screw, without the use of a fastening ring.

Also, in order to minimise the cooling effect from the exhaust line 20, the exhaust line should preferably be provided in a heat insulating material, such as a thermoplastic material.

Above, the invention has been described with reference to specific embodiments. The invention is however not limited to either of these embodiments. Instead the scope of the invention is defined by the following claims.

## Claims

1. A pneumatic power tool (1) comprising:- a pneumatic motor (4) for driving an output shaft (2),-a housing (5), which covers said motor (4) and which has a front end and an opposed rear end, wherein said output shaft (2) is arranged to extend from the housing near the front end of the housing (5), and wherein an air inlet (7) is arranged in the vicinity of the rear end of the housing (5),-a handle (6) arranged at the rear end of said housing (5), and -a supply line (9) for the supply of pressure air to the pneumatic motor (4) via the inlet (7), an exhaust line (20) is arranged to exhaust expanded air that is produced by the pneumatic motor (4) under operation, which exhaust line (20) is arranged rearwards from the housing (5) **characterised in that** said exhaust line extends outside and at a distance from the handle (6) and substantially parallel to said handle (6).

2. The pneumatic power tool (1) according to claim 1, wherein the pneumatic motor (4) is a turbine motor.

3. The pneumatic power tool (1) according to claim 1 or 2, wherein the supply line (9) is arranged inside the handle (6).

4. The pneumatic power tool (1) according to claim 3, wherein the supply line (9) includes a valve (12), and wherein an actuator (14) for activating the pneumatic motor (4) by the opening of said valve (12) is arranged in connection to the handle (6),

5. The pneumatic power tool (1) according to claim 4, wherein a locking lever (21) for locking the actuator (14) in a closed position is arranged on the handle (6), and wherein the locking lever (21) is positioned such that is at least partly covered by the exhaust line (20).

6. The pneumatic power tool (1) according to any of the preceding claims, which power tool is an angle grinder, wherein the output shaft (2) of said angle grinder is arranged to hold a grinder disc.

7. The pneumatic power tool (1) according to claim 6, wherein the housing (5) further has an upper part and an opposed lower part at which the grinder disc is to be arranged and wherein an outlet opening (13) from the power tool housing (5) to the exhaust line (20) is arranged at the lower side of the rear part of the power tool housing (5), such that the exhaust line (20) extends below the handle (6).

8. The pneumatic power tool (1) according to any of the preceding claims, wherein the handle (6) comprises a front part (6a) that is connected to the power tool housing (5), a central handle part (6b) that is intended to be gripped by the hand of an operator, and a rear part (6c) which comprises an inlet nipple (11) for connection to a pressure air supply hose, and wherein the exhaust line (20) is arranged at such a distance from the central handle part (6b) to form a space there between, in which space the fingers of a hand of an operator may be located.

9. The pneumatic power tool (1) according to claim 8, wherein the exhaust line (20) is connected to the rear part (6c) of the handle (6) by means of a heat insulating connective bridge (22), such that the exhaust line (20) and the connective bridge (22) forms a protective loop around the space where the fingers of the hand of the operator is to be located.

10. The pneumatic power tool (1) according to claim 9, wherein the exhaust line (20) comprises a fastening ring (23) adapted to be threaded over a projective ring (24) on the rear part (6c) of the handle (6), the fastening ring (23) being connected to the rear part (6c) of the handle (6) by means of the heat insulating connective bridge (22).

11. The pneumatic power tool (1) according to any of the preceding claims, wherein the exhaust line (20) is made of a heat insulating material.

## Patentansprüche

1. Pneumatisches Werkzeug (1), umfassend: - einen Druckluftmotor (4) zum Antreiben einer Ausgangswelle (2), - ein Gehäuse (5), das den Motor (4) bedeckt und das ein vorderes Ende und ein gegenüberliegendes hinteres Ende aufweist, wobei die Ausgangswelle (2) so angeordnet ist, dass sie vom Gehäuse nahe dem vorderen Ende des Gehäuses (5) aus verläuft, und wobei ein Lufteinlass (7) in der Nähe des hinteren Endes des Gehäuses (5) angeordnet ist, - einen Griff (6), der am hinteren Ende des Gehäuses (5) angeordnet ist, und - eine Versorgungsleitung (9) für die Versorgung des Druckluftmotors (4) mit Druckluft über den Einlass (7), eine Entlüftungsleitung (20), die so angeordnet ist, dass sie entspannte Luft, die von dem Druckluftmotor (4) während des Betriebs erzeugt wird, abführt, wobei die Entlüftungsleitung (20) hinter dem Gehäuse (5) angeordnet ist, **dadurch gekennzeichnet, dass** die Entlüftungsleitung außerhalb des und in einem Abstand zum Griff (6) und im Wesentlichen parallel zu dem Griff (6) verläuft.

2. Pneumatisches Werkzeug (1) nach Anspruch 1, wobei der Druckluftmotor (4) eine Turbine ist.

3. Pneumatisches Werkzeug (1) nach Anspruch 1 oder 2, wobei die Versorgungsleitung (9) innerhalb des Griffs (6) angeordnet ist.

4. Pneumatisches Werkzeug (1) nach Anspruch 3, wobei die Versorgungsleitung (9) ein Ventil (12) aufweist und wobei ein Stellglied (14) zum Aktivieren des Druckluftmotors (4) durch das Öffnen des Ventils (12) in Verbindung mit dem Griff (6) angeordnet ist.

5. Pneumatisches Werkzeug (1) nach Anspruch 4, wobei ein Arretierhebel (21) zum Arretieren des Stellglieds (14) in einer geschlossenen Stellung an dem Griff (6) angeordnet ist, und wobei der Arretierhebel (21) so platziert ist, dass er zumindest teilweise von der Entlüftungsleitung (20) bedeckt ist.

6. Pneumatisches Werkzeug (1) nach einem der vorhergehenden Ansprüche, wobei das angetriebene Werkzeug ein Winkelschleifer ist, wobei die Ausgangswelle (2) des Winkelschleifers so angeordnet ist, dass sie eine Schleifscheibe hält.

7. Pneumatisches Werkzeug (1) nach Anspruch 6, wobei das Gehäuse (5) ferner ein oberes Teil und ein gegenüberliegendes unteres Teil aufweist, an dem die Schleifscheibe angeordnet werden soll und wobei eine Auslassöffnung (13) vom Gehäuse (5) des angetriebenen Werkzeugs zur Entlüftungsleitung (20) an der Unterseite des hinteren Teils des Gehäuses (5) des angetriebenen Werkzeugs angeordnet ist, sodass die Entlüftungsleitung (20) unter dem Griff (6) verläuft.

8. Pneumatisches Werkzeug (1) nach einem der vorhergehenden Ansprüche, wobei der Griff (6) ein vorderes Teil (6a) umfasst, das mit dem Gehäuse (5) des angetriebenen Werkzeugs verbunden ist, ein mittiges Griffteil (6b), das dafür bestimmt ist, von der Hand einer Bedienperson gegriffen zu werden, und ein hinteres Teil (6c), das einen Einlassanschluss (11) für die Verbindung mit einem Druckluftversorgungsschlauch umfasst, und wobei die Entlüftungsleitung (20) in einem derartigen Abstand zum mittigen Griffteil (6b) angeordnet ist, dass ein Raum dazwischen entsteht, in dem sich die Finger einer Hand einer Bedienperson befinden können.

9. Pneumatisches Werkzeug (1) nach Anspruch 8, wobei die Entlüftungsleitung (20) mit dem hinteren Teil (6c) des Griffs (6) mittels einer wärmeisolierenden Verbindungsbrücke (22) derart verbunden ist, dass die Entlüftungsleitung (20) und die Verbindungsbrücke (22) einen Schutzbügel um den Raum herum bilden, wo sich die Finger der Hand der Bedienperson befinden sollen.

10. Pneumatisches Werkzeug (1) nach Anspruch 9, wobei die Entlüftungsleitung (20) einen Befestigungsring (23) umfasst, der so ausgelegt ist, dass er über einen vorspringenden Ring (24) am hinteren Teil (6c) des Griffs (6) gedreht wird, wobei der Befestigungsring (23) mittels der wärmeisolierenden Verbindungsbrücke (22) mit dem hinteren Teil (6c) des Griffs (6) verbunden ist.

11. Pneumatisches Werkzeug (1) nach einem der vorhergehenden Ansprüche, wobei die Entlüftungsleitung (20) aus einem wärmeisolierenden Material gefertigt ist.

## Revendications

1. Outil pneumatique (1) comprenant : - un moteur pneumatique (4) destiné à entraîner un arbre de sortie (2), - un boîtier (5), qui recouvre ledit moteur (4) et qui comporte une extrémité avant et une extrémité arrière opposée, ledit arbre de sortie (2) étant agencé pour s'étendre depuis le boîtier près de l'extrémité avant du boîtier (5), et une entrée d'air (7) étant agencée à proximité de l'extrémité arrière du boîtier (5), - un manche (6) agencé à l'extrémité arrière dudit boîtier (5), et - une conduite d'alimentation (9) destinée à alimenter le moteur pneumatique (4) en air comprimé par le biais de l'entrée (7), une conduite d'échappement (20) étant agencée pour évacuer de l'air détendu qui est généré par le moteur pneumatique (4) lors du fonctionnement, laquelle conduite d'échappement (20) est agencée à l'arrière du boîtier (5), **caractérisé en ce que** ladite conduite d'échappement s'étend à l'extérieur et à une distance du manche (6) et essentiellement parallèlement audit manche (6).

2. Outil pneumatique (1) selon la revendication 1, dans lequel le moteur pneumatique (4) est un moteur à turbine.

3. Outil pneumatique (1) selon la revendication 1 ou 2, dans lequel la conduite d'alimentation (9) est agencée à l'intérieur du manche (6).

4. Outil pneumatique (1) selon la revendication 3, dans lequel la conduite d'alimentation (9) comporte une valve (12), et dans lequel un actionneur (14) destiné à activer le moteur pneumatique (4) par l'ouverture de ladite valve (12) est agencé en liaison avec le manche (6).

5. Outil pneumatique (1) selon la revendication 4, dans lequel un levier de verrouillage (21) destiné à verrouiller l'actionneur (14) dans une position fermée est agencé sur le manche (6), et dans lequel le levier de verrouillage (21) est positionné de telle manière qu'il est au moins partiellement recouvert par la conduite d'échappement (20).

6. Outil pneumatique (1) selon l'une quelconque des revendications précédentes, lequel outil à moteur est une meuleuse d'angle, dans lequel l'arbre de sortie (2) de ladite meuleuse d'angle est agencé pour retenir un disque de meuleuse.

7. Outil pneumatique (1) selon la revendication 6, dans lequel le boîtier (5) comporte en outre une partie supérieure et une partie inférieure opposée sur laquelle le disque de meuleuse est à agencer et dans lequel une ouverture de sortie (13) du boîtier (5) de l'outil à moteur à la conduite d'échappement (20) est agencée sur le côté inférieur de la partie arrière du boîtier (5) de l'outil à moteur, de telle manière que la conduite d'échappement (20) s'étend sous le manche (6).

8. Outil pneumatique (1) selon l'une quelconque des revendications précédentes, dans lequel le manche (6) comprend une partie avant (6a) qui est reliée au boîtier (5) de l'outil à moteur, une partie de manche centrale (6b) qui est destinée à être saisie par la main d'un opérateur, et une partie arrière (6c) qui comprend un raccord d'entrée (11) destiné à la liaison avec un tuyau d'alimentation d'air comprimé, et dans lequel la conduite d'échappement (20) est agencée à une telle distance de la partie de manche centrale (6b) qu'un espace se forme entre elles, espace dans lequel les doigts d'une main d'un opérateur peuvent se trouver.

9. Outil pneumatique (1) selon la revendication 8, dans lequel la conduite d'échappement (20) est reliée à la partie arrière (6c) du manche (6) au moyen d'un pont de liaison (22) isolant thermique, de telle manière que la conduite d'échappement (20) et le pont de liaison (22) forment une boucle protectrice autour de l'espace dans lequel les doigts de la main de l'opérateur doivent se trouver.

10. Outil pneumatique (1) selon la revendication 9, dans lequel la conduite d'échappement (20) comprend une bague de fixation (23) adaptée pour être vissée sur une bague en saillie (24) sur la partie arrière (6c) du manche (6), la bague de fixation (23) étant reliée à la partie arrière (6c) du manche (6) au moyen du pont de liaison (22) isolant thermique.

11. Outil pneumatique (1) selon l'une quelconque des revendications précédentes, dans lequel la conduite d'échappement (20) est constituée d'un matériau isolant thermique.
